(19) Europäisches Patentamt / European Patent Office / Office européen des brevets

(11) EP 3 413 480 A1

(12) EUROPEAN PATENT APPLICATION

(43) Date of publication:
12.12.2018 Bulletin 2018/50

(51) Int Cl.:
H04B 10/077 (2013.01)    H04B 10/079 (2013.01)

(21) Application number: 17174577.1

(22) Date of filing: 06.06.2017

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
MA MD

(71) Applicant: Xieon Networks S.à r.l.
2633 Senningerberg (LU)

(72) Inventors:
• GOTTWALD, Erich
  83607 Holzkirchen (DE)
• SOMMERKORN-KROMBHOLZ, Bernd
  80797 München (DE)

(74) Representative: Lucke, Andreas
  Boehmert & Boehmert
  Anwaltspartnerschaft mbB
  Pettenkoferstrasse 22
  80336 München (DE)

(54) SYSTEM FOR MEASURING A SPECTRUM

(57) The invention comprises a system (10, 110, 210) for measuring a spectrum of an optical signal (20), comprising
- a tunable local oscillator (12),
- a coupler (18, 118, 218) for receiving the local oscillator signal (16) and the optical signal (20) and for superimposing the local oscillator signal with the optical signal,
- a first photodiode (22, 122) for generating a first detection signal (30, 130),
- a first etalon (124) with a first transfer function (40), the first etalon (124) being arranged to receive a portion of the local oscillator signal (16),
- a second etalon (224) with a second transfer function (42), the second etalon (224) being arranged to receive a portion of the local oscillator signal, the second transfer function (42) being different from the first transfer function (40),
- a control and evaluation unit (14), configured for
• sequentially applying a different parameter setting to the local oscillator (12),
• determining for each of said parameter settings the corresponding frequency ($f_{LO}$) of
the local oscillator signal (16) based on
the respective parameter setting,
the correlation between the frequency of the local oscillator signal and the parameter setting,
the transmittance ($T_1$) (or reflectance) of the local oscillator signal portion through the first etalon,
the first transfer function (40),
the second transfer function (42), and
the transmittance ($T_2$) (or reflectance) of the local oscillator signal portion through the second etalon (224),
• determining for each of said parameter settings a corresponding spectral intensity of the optical signal (20) based on the respective first detection signal (30, 130).

Fig. 1

**Description**

TECHNICAL FIELD

The present invention is related to spectral analysis, in particular to a system for measuring a signal spectrum and to a method for measuring a signal spectrum.

BACKGROUND

There are different fields, in which a precise measurement of signal power and wavelength is needed. In coherent long haul transmission systems, for example, polarization resolved precise monitoring of optical channel powers and wavelength is an important quality measure. Especially in capacity limited systems with flexible channel grids, precise and fast channel wavelength supervision of an entity of optical channels is an important feature for more efficient usage of available optical bandwidth.

Especially for the above applications spectrum analyzers are needed which allow to exactly determine a wavelength or frequency and a corresponding spectral intensity.

Grating-based spectrum analyzers are one type of spectrum analyzers but are usually limited in spectral resolution and accuracy. In a grating-based spectrum analyzer power at different wavelengths can be measured, when changing the angle of rotation of the grating. However, determining the wavelength solely from the angle of rotation does not provide exact wavelength information.

Coherent spectrum analyzers are another type of spectrum analyzers, but existing realizations are usually more complex in setup and more expensive.

SUMMARY OF THE INVENTION

The object of the present invention is to provide a system and a method which allow for an accurate, fast and efficient measurement of the spectrum of optical signals.

This object is solved by a system of claim 1 and by a method of claim 14. Preferable embodiments are defined in the dependent claims.

The present invention relates to a system and a method for measuring a spectrum of an optical signal. The system comprises a tunable local optical oscillator for providing a local oscillator signal, wherein the frequency of the local oscillator signal correlates with a parameter setting of the local oscillator. For example, the local optical oscillator may be a tunable single spectral mode laser source with an optical line width of less than 500 MHz, preferably less than 10 MHz. The system further comprises a coupler for receiving the local oscillator signal and the optical signal and for superimposing the local oscillator signal with the optical signal. In preferred embodiments, the local oscillator signal has an optical power that is at least 20 dB higher than the total optical power of the optical spectrum under investigation. The system further comprises a first photodiode for generating a first detection signal in response to receiving superimposed portions of the local oscillator signal and the optical signal, a first etalon with a first transfer function, the first etalon being arranged to receive a portion of the local oscillator signal, a second etalon with a second transfer function, the second etalon being arranged to receive a portion of the local oscillator signal, the second transfer function being different from the first transfer function, and a control and evaluation unit.

The control and evaluation unit is configured for sequentially applying a different parameter setting to the local oscillator, such that the local oscillator signal is sequentially generated with a different frequency. For each of said parameter settings, the corresponding frequency of the local oscillator signal may be determined based on one or more of the respective parameter setting, the correlation between the frequency of the local oscillator signal and the parameter setting, the transmittance of the local oscillator signal portion through the first etalon and/or the reflectance of the local oscillator signal portion by the first etalon at the respective parameter setting, the first transfer function, the transmittance of the local oscillator signal portion through the second etalon and/or the reflectance of the local oscillator signal portion by the second etalon at the respective parameter setting, and the second transfer function. The control and evaluation unit is further configured for determining for each of said parameter settings a corresponding spectral intensity of the optical signal based on the respective first detection signal.

Accordingly, the tunable local oscillator can be tuned by varying the parameter setting of the local oscillator and the respective wavelengths can be exactly determined based on a rough knowledge of the corresponding wavelength or frequency positions from the before mentioned correlation and on the etalon measurements. The corresponding spectral intensity of the optical signal at each thus exactly and directly measured frequencies can be obtained by coherent detection, i.e. by superimposing the optical signal with the local oscillator signal and by detecting the corresponding intensity.

This allows precisely measuring a complete spectrum of the optical signal by exactly determining a plurality of spectrum points without need to precisely and exactly adjust the frequency of the local oscillator signal to certain predetermined spectral positions. Because for each new parameter setting the respective roughly known local oscillator frequency is exactly determined, there is no need to exactly tune the local oscillator frequency to a specific predetermined measurement position. Therefore, no dedicated control of the local oscillator frequency is required. Instead, the local oscillator frequency can be taken as it is, such that the local oscillator can be quickly and efficiently tuned over a desired spectrum range by varying corresponding parameters without need to know the exact actual relation between the actual setting parameters and the actually resulting wavelength. This allows for a comparatively fast and accurate measurement.

Because each adjusted wavelength is exactly measured by using the etalons, no accurate calibration or accurate internal measurement of the local oscillator is required. Therefore, the system does not require complex and expensive components and can have a low complexity at low cost.

The parameter setting may comprise, for example, the value of an applied bias current, the value of an applied bias voltage and/or the value of the temperature of the local oscillator. Therein, the parameters may directly influence the frequency of the local oscillator or may indirectly influence the frequency via other parameters. Further, the parameters of the parameter setting may be set directly or indirectly via other parameters.

In some embodiments the local oscillator comprises a distributed Bragg reflector (DBR) laser, a distributed feedback laser (DFB) laser, a SG-DBR (sampled grating DBR laser) with four sections (rear reflector, phase section, active section and front reflector) and/or an integrated tunable laser assembly (ITLA). The wavelength of a DBR laser is temperature dependent and the temperature can be influenced by a bias current. In some embodiments, the local oscillator comprises multiple DBR or DFB lasers, wherein each DBR or DFB laser is used for a different wavelength range.

The first and/or second transfer functions may have a free spectral range, FSR, between 5 GHz and 200 GHz, preferably between 10 GHz and 50 GHz, wherein the free spectral ranges are almost identical. The FSR corresponds to the spectral distance between two adjacent maxima in the transfer function, and therefore the period of the transfer function of the etalon, which is also designated as Fabry-Pérot interferometer in the art. These ranges are particularly useful for exactly determining optically frequencies.

In some embodiments the first and second transfer functions have a free spectral range, FSR, and differ in that they are shifted with respect to each other by < FSR/2, preferably by approximately FSR/3, for example within a range of $\pm$ 5% of FSR/3. The combination of two etalons having the same or a similar FSR and respective transfer functions being shifted by spectral range less than FSR/2, allows avoiding that a local maximum or minimum of one transfer function coincides with a local maximum or minimum of the other transfer function. As a result ambiguities within the spectral range of the FSR can be avoided and the accuracy, up to which the frequency must be known based on the correlation, can be lower.

In one or more of the before mentioned embodiments the first and/or second transfer functions have a finesse between 2 and 4, preferably of 3. The finesse of the etalon corresponds to the FSR divided by the full-width of a maximum of the transfer function at half the maximum. A finesse of 3 in combination with a shift of FSR/3 allows for an optimal sensitivity for determining the wavelength or frequency.

In some of the before mentioned embodiments the coupler is a fiber optic polarization maintaining coupler for providing at a coupler output mixed first polarization components on a first polarization maintaining fiber axis and mixed second orthogonal polarization components on a second orthogonal polarization maintaining fiber axis, wherein the system further comprises a polarization beam splitter for separating the mixed first polarization components from the mixed second orthogonal polarization components and a second photodiode for generating a second detection signal in response to receiving the mixed second orthogonal polarization components, wherein the first photodiode is arranged for generating the first detection signal in response to receiving the mixed first polarization components. This allows for a polarization resolved spectral measurement, such that the spectra of different polarizations can be investigated or monitored simultaneously. Further it is possible, to investigate correlations between different polarizations.

In preferred embodiments the system comprises photodetectors downstream and upstream of each etalon for determining the transmittance and/or the reflectance for the different parameter settings.

In one or more embodiments the coupler has a first input connected to the local oscillator, a second input for receiving the optical signal, a first output connected to the first photodiode or to the first and second photodiodes, and a second output connected to the first etalon or to the first and second etalons.

In the before mentioned embodiments the first output of the coupler can be connected via the polarization beam splitter to the first and second photodiodes and a second output of the coupler can be connected via a beam splitter to the first and second etalons.

In some of the before mentioned embodiments the first and/or second photodiode has an electro-optical bandwidth > 100 MHz. This allows to measure the spectral intensity of the optical signal for each parameter setting within a corresponding range > 100 MHz.

According to some embodiments the first and/or second photodiode has a lower cut-off frequency > 10 MHz. Typical local oscillators, such as integrated tunable laser assemblies (ITLA), have a high relative intensity noise (RIN) in the range below 10 MHz. This noise can therefore be effectively suppressed in some embodiments.

Preferably the systems according to the before mentioned embodiments are configured for sequentially generating the local oscillator signal with a different frequency without feedback control of the local oscillator. This allows for a significant faster tuning and for more efficient measurements.

The present invention further relates to a method for measuring a spectrum of an optical signal with a system of one or more of the before mentioned embodiments. The method comprising the following steps: Sequentially applying a different parameter setting to the local oscillator, such that the local oscillator signal is sequentially generated with a different frequency, and determining for each of said parameter settings the corresponding frequency of the local oscillator signal based on the respective parameter setting, on the correlation between the frequency of the local oscillator signal and the parameter setting, on the transmittance of the local oscillator signal portion through the first etalon and/or the reflectance of the local oscillator signal portion by the first etalon at the respective parameter setting, on the first transfer function, on the transmittance of the local oscillator signal portion through the second etalon and/or the reflectance of the local oscillator signal portion by the second etalon at the respective parameter setting, and on the second transfer function. The method further comprises the step of determining for each of said parameter settings a corresponding spectral intensity of the optical signal based on the first detection signal.

In some embodiments the generated sequence of different frequencies is not a monotonously increasing sequence or monotonously decreasing sequence and/or consecutive frequencies are not equally spaced. For some cases, this may allow for a faster and more efficient tuning or sweeping of the frequency of the local oscillator, for example, when the local oscillator comprises different lasers for different frequency ranges and when each individual laser can be tuned by a temperature variation. In this case, at a certain temperature each laser can be addressed sequentially before the lasers are addressed at a different temperature.

In one or more of the before mentioned embodiments the method further comprises the following steps: Defining a set of different frequencies for the local oscillator signal, determining the corresponding set of different parameter settings for the local oscillator based on the correlation between the frequency of the local oscillator signal and the parameter setting, sequentially applying the determined different parameter settings such that the differences between succeeding parameter settings are minimal, or at least less than the average differences that would occur if the parameter settings were chosen according to a monotonous increase or decrease among the frequencies of said set. This can allow reducing the respective settling time of the local oscillator for each individual measurement of a spectrum point or at least some of them and may allow for a particular fast and efficient spectral measurement.

In some embodiments the method further comprises determining whether the first and second detection signals are correlated and to what extent. This allows, for example, to distinguish between pure amplified spontaneous emission (ASE), which is typically unpolarized without any correlation between different polarization components, and polarization multiplexed signal. That is, because even in the improbable case that the different polarizations of the polarization multiplexed signal are exactly aligned with respect the polarization beam splitter there is still some measurable correlation due to transitions between the different polarizations.

In this document, the "term local oscillator" will be used as it is common practice in the theory of signal detection. Thus, a local oscillator is an optical oscillator generating an auxiliary signal that is superimposed with an optical signal in order to produce a frequency conversion in a mixing process.

BRIEF DESCRIPTION OF THE DRAWINGS

Further details and advantages of the present invention will become apparent from the following description, in which preferred embodiments are described in detail with reference to the appended drawings, in which:

FIG. 1  shows a system according to an exemplary embodiment of the present invention.

FIG. 2  shows a system according to another exemplary embodiment of the present invention.

FIG. 3  shows a system according to further exemplary embodiment of the present invention.

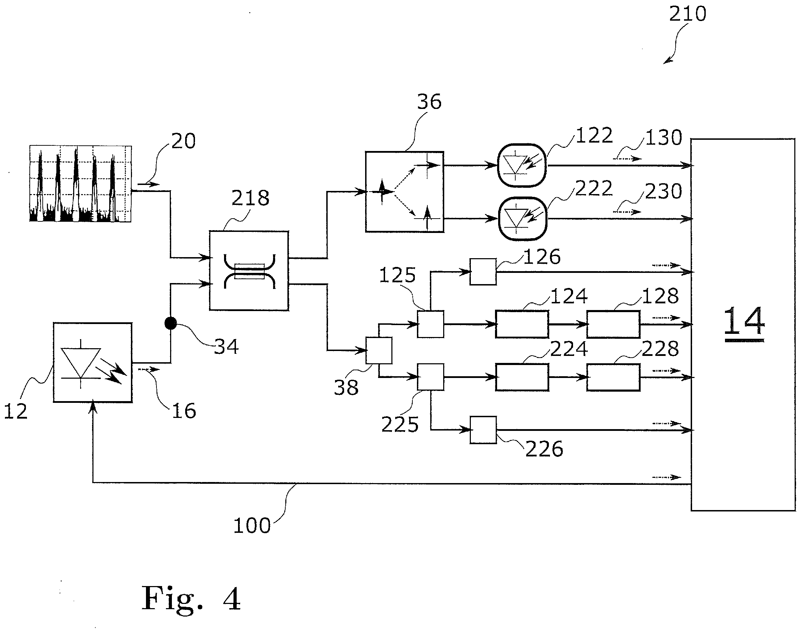

FIG. 4  shows a system according to a next further exemplary embodiment of the present invention.

FIG. 5  shows transfer functions of etalons for use in systems according to embodiments of the present invention.

FIG. 6  the 3D-plot shows frequency (z-axis) as a function of the transmissions $T_1$ and $T_2$ of the etalons (x-axis, y-axis)

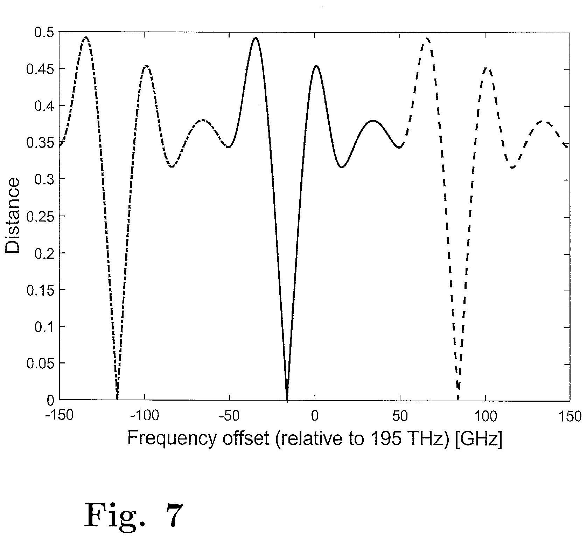

FIG. 7  shows the distance between a measured point $(X_1, X_2)$ and the calculated or measured transfer functions of the two etalons $(T_1, T_2)$ as a function of frequency in a frequency intervall of about two times FSR including the estimated laser frequency based on laser control parameters

FIG. 8    shows projection curves of the 3D-plot of Fig. 6 for three different values of the finesse and the frequency running through different number of periods.

In the drawings same elements are designated with same reference numbers.

## DETAILED DESCRIPTION OF PREFERRED EMBODIMENTS

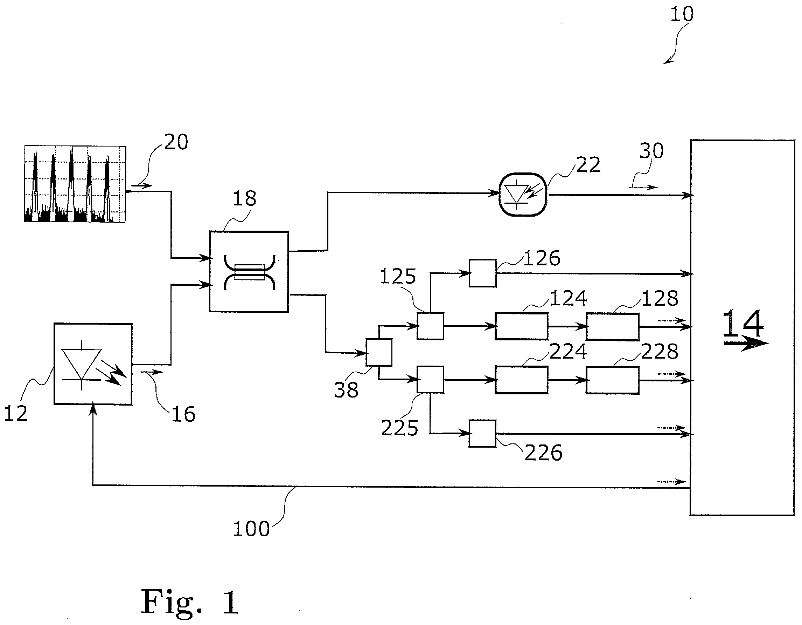

FIG. 1 illustrates a system 10 according to first embodiment of the present invention. The system 10 comprises a tunable local oscillator 12 for providing a local oscillator signal 16 being connected to a control and evaluation unit 14. The local oscillator 12 is further connected to a first input of a 2x2 coupler 18. The coupler 18 has a second input for receiving an optical signal 20, a first output connected to a photodiode 22 and a second output connected to an etalons 124 and 224, also designated as Fabry-Pérot interferometers in the art.

First photo detectors 126, 226, such as photodiodes, are connected to the respective inputs of etalons 124 and 224, via corresponding splitters 125, 225, for measuring an incoming signal intensity upstream of the etalons 124, 224. Two second photodetectors 128 and 228 ,such as photodiodes, are connected to the respective outputs of the etalons 124, 224, for measuring a respective outputted signal intensity downstream of the etalons 124, 224. The photodiode 22 as well as the first and second photodetectors 126, 226, 128, 228 are connected to the control and evaluation unit 14 for providing corresponding measurement signals to the control and evaluation unit 14.

The system 10 allows for an efficient and accurate measurement of the spectrum of the optical signal 20 as will be explained in the following.

The local oscillator 12 may correspond to a DBR laser, a DFB laser, an ITLA and/or a combination of one or more of these lasers. In some embodiments, the local oscillator 12 comprises plural DBR lasers, wherein each of these lasers is tunable over a corresponding different spectral range, wherein all of these different tuning ranges compose an overall tuning range of the local oscillator 12.

The tuning of the local oscillator 12 is performed by varying a parameter setting of the local oscillator 12. The parameters, which are varied by the control and evaluation unit 14, may comprise for example a bias voltage, a bias current, a temperature and/or other parameters.

The variation of the frequency of the local oscillator signal 16 within the spectral tuning range for the purpose of measuring the spectrum of the optical signal 20 is preferably only performed based on the application of different parameter settings which in turn causes a corresponding variation of the generated frequency. Hence, the frequency of the local oscillator 12 need not be varied based on any dedicated frequency control mechanism, e.g. a feedback control mechanism and/or a control loop, for reducing a deviation of the actual frequency from a target frequency in order to control the frequency of the local oscillator signal 16 to exactly match a specific predefined target spectral position. The application of a sequence of different parameter settings allows for a significantly faster frequency variation.

It is noted that for the purpose of measuring the spectrum it is not necessary that the frequency of the local oscillator 12 is varied continuously, monotonously and/or in specific constant spectral steps. The correlation between the parameter setting and the resulting wavelength may be complex and nonlinear, such that equidistant, monotonous parameter changes may not result in equidistant monotonous frequency changes. For example, small parameter changes may result in large frequency changes, and vice versa. If the frequency responds very sensitive even to small parameter changes, it may be difficult to predict the resulting frequency exactly based on the parameter. Further, the exact actual correlation between each applied parameter setting and each respectively resulting wavelength may not be exactly known, e.g. if the correlation slightly varies over time due to de-calibration or unknown other parameter changes. However, since each resulting wavelength is individually and exactly determined, as explained further below, the actual correlation need not even be known exactly.

The coupler 18 receives the local oscillator signal 16 and the optical signal 20 and superimposes these signals, such that a superimposed signal is outputted at the first output, wherein the superimposed signal comprises a portion of the intensity of the local oscillator signal 16 and a portion of the intensity of the optical signal 20. Preferably, each portion comprises the complete spectral range of the respective signal 16, 20. At the second output of the coupler 18 a signal is provided, which comprises a portion of the local oscillator signal 16 at the respectively generated frequency.

The exact value of the respectively generated local oscillator frequency is determined by use of the etalons 124 and 224. As explained before, while the correlation between the applied parameter setting and the resulting frequency of the local oscillator signal 16 may not allow predicting the frequency exactly, it can allow for a rough prediction of the frequency. Based on the approximately known frequency position and on the corresponding spectral transmittance at the etalons 124 and 224, it becomes possible to determine the frequency position exactly. For example, the respective spectral transmittance through the etalon 124 and/or the respective spectral reflection from the etalon 124 at that specific frequency of the local oscillator signal 16 can be determined based on the intensities measured by photodetectors 126 and 128.

Even though the second output of the coupler 18 may additionally output a portion of the optical signal 20, this need not impede the frequency measurement of the local oscillator signal 16, because the intensity of the local oscillator signal 16 may be comparatively high as compared to the intensity of the optical signal 20.

The intensity of the optical signal 20 at the actual local oscillator frequency or in a spectral range of the electro-optical bandwidth of the photodiode 22 around the actual local oscillator frequency can be determined from the measurement with the photodiode 22. The photodiode 22 generates a detection signal 30 in response to the reception of the superimposed portions of the local oscillator signal 16 and the optical signal 20. The electrical detection signal 30 only comprises frequencies within the electro-optical bandwidth of the photodiode 22. In this range only those spectral portions of the optical signal 20 are contained which are spectrally separated from the actual local oscillator frequency up to the electro-optical bandwidth. From the respective detection signal 30, the relative spectral density of the spectral components can be determined. It is not necessary that the intensity of the local oscillator signal 16 is constant during scanning, since the detected relative spectral density can be corrected as the local oscillator is continuously measured by the photodetectors 126 and 226. The detected relative spectral density is proportional to the square root of the local oscillator power.

In some embodiments the photodiode 22 has an electro-optical bandwidth > 100 MHz, such as 150 MHz, 200 MHz or 500 MHz, for example. If a spectral range of 5 THz has to be measured or analyzed, for example, and if the electro-optical bandwidth of the photodiode 22 is 500 MHz, the spectral range can be completely covered or approximately covered by about 10,000 succeeding measurements, which is possible in a few seconds.

In some embodiments the photodiode 22 has a bandpass characteristic with a lower cut-off frequency of > 10 MHz suppressing the frequency range where relative intensity noise (RIN) of the respective local oscillator 12 is high. The local oscillator 12 may be an ITLA, for example. Typically ITLAs have a comparatively low RIN for frequencies above 10 MHz, in particular above 50 MHz and even more above 100 MHz, and have a comparatively high RIN for frequencies below 10 MHz. The above bandpass characteristic may therefore allow for a more sensitive and accurate spectrum measurement with more accurate intensity values.

By changing the local oscillator frequencies it is possible to determine intensities of the optical signal 20 at different spectral positions. These spectral positions correspond to the respective local oscillator frequencies, which can be exactly determined as explained above. This allows exactly determining the complete spectrum of the optical signal 20.

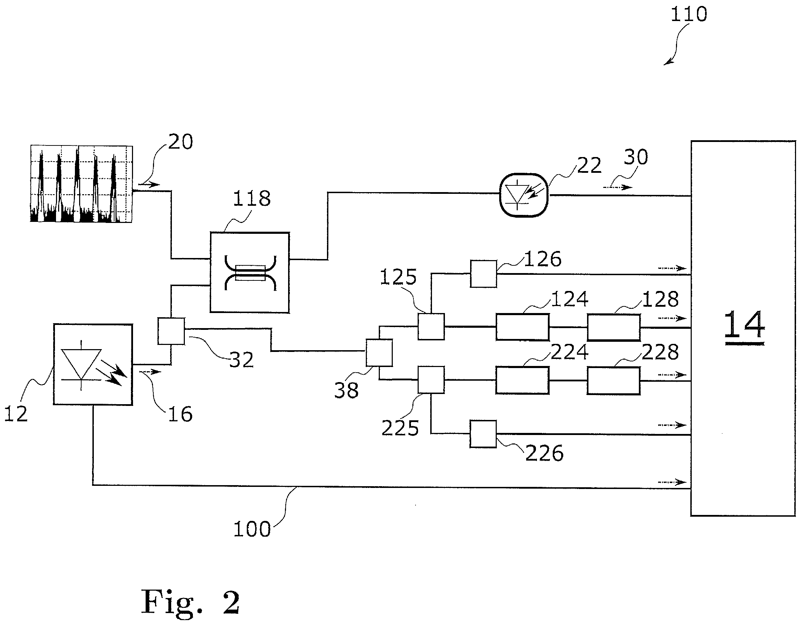

FIG. 2 illustrates a system 110 according to another embodiment of the present invention. The system 110 only differs from the system 10 of FIG. 1 in that it further comprises a splitter 32 and in that it comprises a 2X1 coupler 118 instead of the coupler 18. The splitter 32 may correspond to a 50/50-splitter for splitting the local oscillator signal 16 into two identical signal portions, wherein one of these portions is provided to the first input of the coupler 118 and the other portion is provided to the etalons 124 and 224. In other embodiments, the local oscillator signal 16 may be split with different splitting ratios. The superimposed signal which is outputted at the output of the coupler 118 comprises a portion of the local oscillator signal 16 superimposed with the optical signal 20 or with a portion thereof. The operation of the system 110 and the corresponding advantages are similar to those of the system 10, such that it is referred to the corresponding previous description with respect to FIG. 1. Using this setup, any impact of the optical signal 20 on the determination of the frequency of the local oscillator signal is excluded.

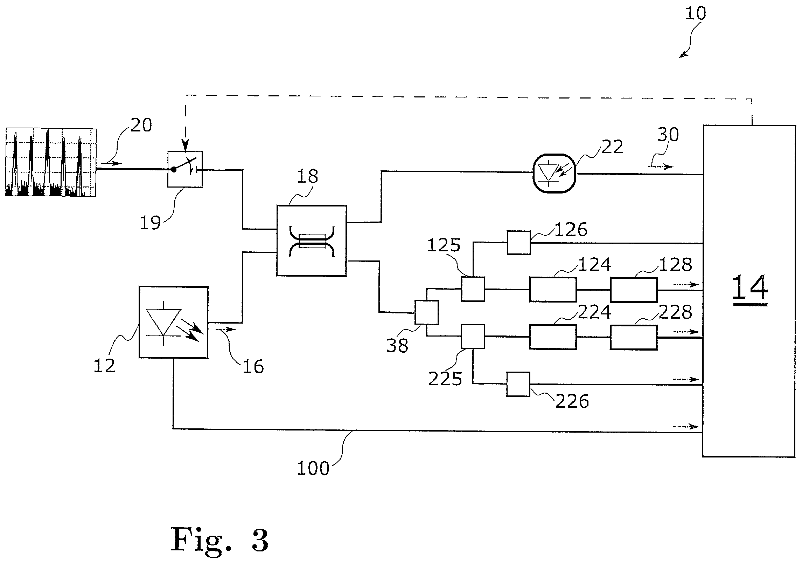

Fig. 3 shows a modification of the system 10 of Fig. 1 allowing to suppress any influence of the optical signal 20 on the determination of the frequency of wavelength of the local oscillator signal 16. Periodically, the optical signal 20 is blocked for a predetermined period of time by a gating device 19. The gating device 20 may for example by an optical switch or a variable optical attenuation, and it is controlled by the control and evaluation unit 14. The frequency of the local oscillator signal 16 is determined within the periods of time during which the optical signal is blocked, whereas the remaining time is used for performing the measurements directed to the optical signal.

FIG. illustrates a system 210 according to further embodiment of the present invention, which is configured for performing a polarization resolved measurement of the spectrum of the optical signal 20.

The system 210 comprises a polarization maintaining coupler 218 having a first input connected via a splice point 34 to the local oscillator 12, a second input for receiving the optical signal 20, a first output connected to a polarization beam splitter 36 and a second output connected via a splitter 38 to a first etalon 124 and to a second etalon 224.

The coupler 218 may correspond to a fiber optic coupler, wherein each input and output comprises a polarization maintaining fiber with a fast axis and a slow axis. The polarization components arriving on each of the first and second input on the respective fast axis are mixed and a portion of these mixed components is outputted on the fast axis of the first output. Similarly, the polarization components arriving on each of the first and second input on the respective slow axis are mixed and a portion of these mixed components is outputted on the slow axis of the first output. In other words, for the mixed signal portions which are outputted at the first output of the coupler 218 the orientation of the polarization is maintained, such that each of both orthogonal polarization components comprises a mix of the respective polarization component at the first input and of the respective polarization component at the second input. The splice 34 is adjusted in angle with regard to the slow and the fast axes of the coupler 218 such that the optical powers in the slow and fast axes are equal. The output fiber of the local oscillator has to be a polarization preserving fiber.

The signal outputted at the second output of the coupler 218 comprises a portion of the local oscillator signal 16. In some embodiments, the optical powers of the local oscillator signals outputted at the first and second output of the coupler 218 are identical. In other embodiments these signals are different with a difference less than 10 dB.

The polarization beam splitter 36 is arranged and coupled to the first output of the coupler 218 to separate the polarization components of the mixed signal received at the polarization beam splitter 36, such that a mixed first polarization component, e.g. an X component, is provided to a first photodiode 122 and such that a mixed second polarization component, e.g. a Y component, is provided to a second photodiode 222. In response to receiving the respective mixed polarization component the first photodiode 122 generates a first detection signal 130 and the second photodiode 222 generates a second detection signal 230.

The splice point 34 may correspond to a 45°-splice connection ensuring that the axis of a linear polarization of the local oscillator signal 16 is tilted by 45° to each of the fast axis and the slow axis of the fiber at the first input of the coupler 218. In this case 50% of the intensity of the local oscillator signal 16 is received on each of both polarization maintaining axes at the coupler 218 and each of the photodiodes 122, 222 receives a similar portion of the local oscillator signal 16. In other embodiments the before mentioned splicing angle can be different.

It is noted that the present invention is not limited to the use of fiber optic components. In other embodiments no splice points need to be present and the systems can be formed completely without fiber optic components. In these embodiments the corresponding components 12, 218, 36 can be arranged and connected such that each photodiode 122, 222 receives a portion of the local oscillator signal 16.

In a similar way, as it has been explained before for the detection signal 30, the detection signals 130, 230 can be used to determine a spectral intensity of the optical signal 20 at or around the respective frequency of the local oscillator signal 16, wherein the intensity of the first polarization component of the optical signal 20 can be determined based on the first detection signal 130 and the intensity of the second polarization component of the optical signal 20 can be determined based on the second detection signal 230.

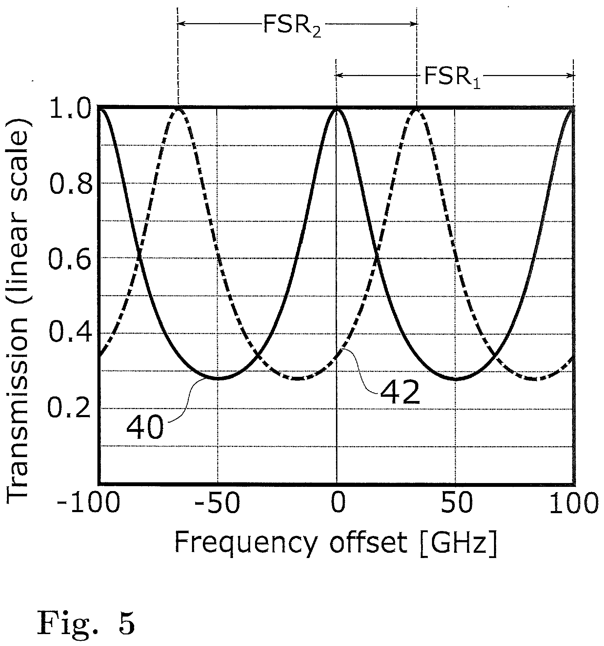

The wavelength of the local oscillator signal 16 can be determined for each different parameter setting by use of the following components: The etalons 124, 224, the photodetectors 126, 226 being arranged upstream of the etalons 124, 224 and the photodetectors 128, 228 being arranged downstream of the etalons 124, 224. This will be explained in further detail with respect to FIG. 5.

FIG. 5 illustrates a first transfer function 40 of the first etalon 124 and a second transfer function 42 of the second etalon 224 for a common the spectral range in the width of 200 GHz, wherein the frequencies of this range are illustrated as a relative frequencies with respect to an optical reference frequency $f_{ref}$ (located at o GHz in FIG. 5).

The transfer functions 40, 42 are known and indicate the amount of the transmitted intensity per wavelength or frequency of the incoming signal and can be obtained based on the parameters of the etalons and/or by an initial measurement. The transfer functions 40, 42 are periodic with a period corresponding to the respective free spectral range (FSR, in this example 100 GHz) and are further characterized by a corresponding finesse F. The finesse F is defined by the FSR divided by the full width $\delta$ at half maximum, i.e. $F = FSR/\delta$.

In the system 210 of FIG. the transfer functions 40, 42 have a FSR of about 100 GHz, have the same F of about 2.5 and only differ in that they are shifted with respect to each other by FSR/3 around reference frequency. Other embodiments may have other transfer functions differing differently.

From this figure, it appears that both etalons have identical free spectral ranges but the transfer functions are shifted with respect to each other ($FSR_1 = FSR_2$). However, such a pair of etalons will typically by realized by choosing slightly different values of the free spectral ranges. This will be illustrated by means of a simple example. Assuming that the etalons are operated within the conventional wavelength band (C-band) around 1550 nm, the reference frequency amounts to 193.4 THz. With a free spectral range of $FSR_1$=100 GHz for the first etalon, the reference frequency is at the transition point from the 1934th period to the 1935th period of the transfer function. If the free spectral range of the second etalon is slightly smaller, namely $FSR_2$ = 99.99 GHz in this example, the reference frequency already falls within the 1935th period of this etalon (193.4 THz / 99.99 GHz = 1934.33) and the two transfer functions appear to be shifted by 1/3 of their period, although this is an approximation only and is not strictly speaking correct. Nevertheless, we will consider the transfer functions as having identical free spectral ranges and being shifted by one third of their free spectral range.

For exactly determining the actual frequency $f_{LO}$ of the local oscillator signal 16 which is generated in response to the application of a specific parameter setting, the control and evaluation unit 14 determines a value $f_{corr}$ for the actual frequency $f_{LO}$ based on the parameter setting which is applied by the control and evaluation unit 14 to the local oscillator 12 and based on a correlation between the frequency of the local oscillator signal 16 and the parameter setting. This frequency serves as a first estimate of the actual frequency and indicates in which period of the transfer function the local oscillator signal falls. It is important for the decidedness that the frequency error of the actual frequency $f_{LO}$ based on the parameter setting is less than $FSR/2$. This correlation may correspond, for example, to a relation between an applied current or an applied voltage and the resulting local oscillator frequency 12. The correlation may be provided by the supplier of the local oscillator 12 or may have been measured during an initial calibration measurement. As explained before, such a predetermined or pre-known correlation does usually not allow exactly predicting the resulting actual frequency $f_{LO}$. This correlation is preferably stored in the control and evaluation unit 14, e.g. in the form of a lookup table, and can also be used for determining different parameter settings to be applied for measuring a spectrum in a desired spectral range at desired corresponding spectral positions before actually performing the measurement or before applying the determined different parameter settings.

For each actual local oscillator frequency $f_{LO}$ which is generated when applying a respective parameter setting, the respective transmission or transmittance $T_1$ at the first etalon 124 and the respective transmittance $T_2$ at the second etalon 224 can be determined by the control and evaluation unit 14 of the system 210 by dividing the input optical power to the respective etalon (126, 226) by the respective transmitted output power.

An etalon can for example be realized as a Fabry Pérot interferometer having in the ideal case a transfer function T(f) described by

$$T(f) = \frac{(1-r^2)}{(1-r)^2 + 4 \cdot r \cdot \sin^2\left(\pi \cdot \frac{f}{FSR}\right)} , \qquad (1)$$

where r stands for the reflectivity of each of the mirrors and f represents frequency. For simplicity reasons, it has been assumed that both mirrors have the same reflectivity. The free spectral range FSR depends on design parameters such as the length L of the resonator cavity and its refractive index n and the velocity of light in vacuum $c_0$:

$$FSR = \frac{c_0}{2 \cdot n \cdot L} . \qquad (2)$$

Typically, Fabry Pérot interferometers are furthermore characterized by the ratio of the free spectral range *FSR* and the full width at half maximum (FWHM) bandwidth B. This ratio is commonly called finesse and depends on the reflectivity of the mirror according to the equation

$$F = \frac{FSR}{B} = \frac{\pi\sqrt{r}}{1-r} . \qquad (3)$$

Making use of this equation, equation (1) could be rewritten by replacing the reflectivity r by a corresponding term derived from equation (3) and describing this parameter as a function of the finesse *F*.

Preferably, the transfer functions of the two etalons are shifted by one third of the free spectral range of the first etalon. Mathematically speaking, the free spectral range of the second etalon is equal to

$$FSR_2 = \frac{N+k+\frac{1}{3}}{N} \cdot FSR_1 \qquad (4)$$

where N is the ratio of the reference frequency and the free spectral range of the first etalon

$$N = \frac{f_{ref}}{FSR_1} , \qquad (5)$$

and k being an integer number with *k << N.* Based on measurement values $X_1$ and $X_2$ for the transmittance values $T_1$ and $T_2$, the frequency of the local oscillator signal can be determined by solving the system of equations:

$$X_1 = \frac{(1-r^2)}{(1-r)^2 + 4 \cdot r \cdot \sin^2\left(\pi \cdot \frac{f}{FSR_1}\right)} \qquad (6)$$

$$X_2 = \frac{(1-r^2)}{(1-r)^2 + 4 \cdot r \cdot \sin^2\left(\pi \cdot \frac{f}{FSR_2}\right)} \qquad (7)$$

The result will be unique up to a periodic shift that is determined as described above from the parameter settings of the local oscillator. Instead of solving the above system of equations, the actual frequency can also be determined from a table providing pairs of the values $T_1$ and $T_2$ for one period of the transfer functions.

FIG. 5 shows the transfer function 40 of the first etalon and the transfer function 42 of the second etalon with respect to the reference frequency (preferably near center of laser tuning range). The shown transfer functions $T_1$ and $T_2$ can be calculated from the theory above and some measurement set done for characterization or e.g. completely measured during calibration of the etalons.

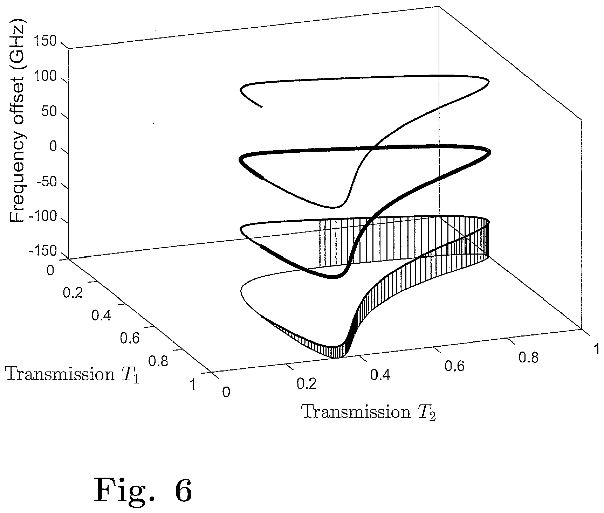

Fig. 6 provides a three-dimensional parametric representation of the relation between the values of the transfer functions $T_1$ and $T_2$ and the frequency of the local oscillator signal (vertical axes) indicated as an offset relative to the reference frequency. The relation is shown for three periods of the transfer functions, wherein the second period is represented by a thicker line. Furthermore, the projection of the three-dimensional curve on the plane spanned by the two axes representing the two transmittance values $T_1$ and $T_2$ is shown. The curve has been calculated for a finesse of 2.5 and a free spectral range of 100 GHz at a reference frequency of 195 THz. Thus, $N$ equals 1950 according to equation (5). Within one period, a pair of values $T_1$ and $T_2$ can be assigned unambiguously to one frequency.

Typically, the measurement results are affected by additive noise and the measured values $X_1$ and $X_2$ of the transmittance do not necessarily correspond exactly to a pair of values $T_1$ and $T_2$ of the transfer functions for which the corresponding frequency is known. Therefore, preferably the distance

$$d(f) = \sqrt{(T_1(f) - X_1)^2 + (T_2(f) - X_2)^2} \qquad (8)$$

between the measurement values $X_1$ and $X_2$ and the values of the transfer functions $T_1$ and $T_2$ for all recorded frequency values is calculated. Finally, the frequency providing minimum distance and falling within the period of interest is identified with the actual frequency. Of course, other mathematical definitions of the distance such as

$$d(f) = |T_1(f) - X_1| + |T_2(f) - X_2| \qquad (9)$$

can by used. Furthermore, the result can be further improved by taking several measurement values and averaging them.

Fig. 6 shows the distance as a function of the frequency for measurements values $X_1$=0.6 and $X_2$ = 0.67 for a reference frequency of 195 THz, an FSR of 100 GHz and a finesse of 2.5 GHz. In this figure, the period of interest that has been identified from the parameter set applied to the local oscillator is represented by a thick line. Thus, the actual frequency of the local oscillator signal equals 195 THz - 16 GHz =194.984 THz.

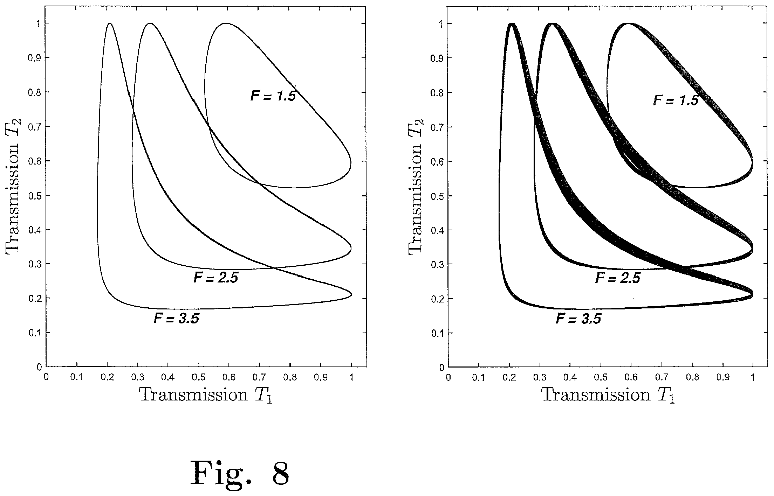

In the above considerations it has been assumed that the pairs of transmittance values $T_1$ and $T_2$ run through the same cycle within each period of the transfer functions when increasing frequency. Strictly speaking this is not correct from a mathematical point of view since the two transfer functions have slightly different free spectral ranges and different period lengths. But the deviations are so small that this assumption is very well fulfilled for practical applications. Both plots shown in Fig. 8 display the projection of the three-dimensional parametric curve to the plane spanned by the axes for $T_1$ and $T_2$ introduced in Fig. 6 for values of the finesse of 1.5, 2.5, and 3.5. On the left side, the frequency runs through ten periods which is more than sufficient to cover the complete C-band and no deviations are visible. In fact, is seems that the pairs of transmittance values $T_1$ and $T_2$ run ten times through the same closed curve. That the curves are not really closed becomes obvious only when considering a larger number of periods. The plots on the right side of Fig. 8 show the same projection curves but now for one hundred periods. Obviously, there are some small deviations and the actual frequency could theoretically be determined from the measured transmittance values $X_1$ and $X_2$ only except for some crossing points. However, taking into account that the measurement results are affected by noise, the accuracy will be very poor. In conclusion, assuming that the pairs of transmittance values $T_1$ and $T_2$ run through the same cycle during each period of the transfer functions is a well justified assumption and the curve shown confirms the applicability of the described technique for practical applications.

It is noted that instead of determining the local oscillator frequency based on the transmittance T the local oscillator frequency can also be determined based on the reflectance R, which is directly derivable from the transmittance, e.g. in case of no losses by T + R = 1.

Furthermore, the presented considerations are based on the transmittance of the etalons, i.e. the ratio of the power after the etalon and the power before the etalon. Obviously, there is no need to measure power levels before the etalons if the relative attenuation values for the two branches after the splitter 38 are known and the measured power levels can be used directly (after some correction) instead of the transmittance values $T_1$ and $T_2$.

While the present invention has been described in detail with respect to specific embodiments, these embodiments are not intended to limit the scope of the present invention, which is solely defined by the appended claims.

Different features can be important in any combination.

LIST OF REFERENCE SIGNS:

| | |
|---|---|
| 10, 110 | system |
| 12 | local oscillator |
| 14 | control and evaluation unit |
| 16 | local oscillator signal |
| 18, 118, 218 | coupler |
| 19 | gating device |
| 20 | optical signal |
| 22, 122, 222 | photodiode |
| 24, 124, 224 | etalon |
| 26, 126, 226 | upstream photodetector |
| 28, 128, 228 | downstream photodetector |
| 30, 130, 230 | detection signal |
| 32 | splitter |
| 34 | splice point |
| 36 | polarization beam splitter |
| 38 | splitter |
| 40 | first transfer function |
| 42 | second transfer function |

**Claims**

1. A system (10, 110, 210) for measuring a spectrum of an optical signal (20), comprising

- a tunable local oscillator (12) for providing a local optical oscillator signal (16), wherein the frequency of the local oscillator signal correlates with a parameter setting of the local oscillator,
- a coupler (18, 118, 218) for receiving the local oscillator signal (16) and the optical signal (20) and for superimposing the local oscillator signal with the optical signal,
- a first photodiode (22, 122) for generating a first detection signal (30, 130) in response to receiving superimposed portions of the local oscillator signal (16) and the optical signal (20),
- a first etalon (124) with a first transfer function (40), the first etalon (124) being arranged to receive a portion of the local oscillator signal (16),
- a second etalon (224) with a second transfer function (42), the second etalon (224) being arranged to receive a portion of the local oscillator signal, the second transfer function (42) being different from the first transfer function (40),
- a control and evaluation unit (14), configured for

  • sequentially applying a different parameter setting to the local oscillator (12), such that the local oscillator signal (16) is sequentially generated with a different frequency,
  • determining for each of said parameter settings the corresponding frequency ($f_{LO}$) of the local oscillator signal (16) based on

    ▪ the respective parameter setting,
    ▪ the correlation between the frequency of the local oscillator signal and the parameter setting,
    ▪ the transmittance ($T_1$) of the local oscillator signal portion through the first etalon and/or the reflectance of the local oscillator signal portion by the first etalon at the respective parameter setting,
    ▪ the first transfer function (40),
    ▪ the second transfer function (42), and
    ▪ the transmittance ($T_2$) of the local oscillator signal portion through the second etalon (224) and/or the reflectance of the local oscillator signal portion by the second etalon (224) at each of said different parameter settings,

• determining for each of said parameter settings a corresponding spectral intensity of the optical signal (20) based on the respective first detection signal (30, 130).

2. The system (10, 110, 210) of claim 1, wherein the parameter setting comprises the value of an applied bias current, the value of an applied bias voltage and/or the value a temperature of the local oscillator.

3. The system (10, 110, 210) of claim 1 or 2, wherein the local oscillator comprises a distributed Bragg reflection (DBR) laser, a distributed feedback (DFB) laser, a sampled grating (SG) DBR laser, and/or an ITLA.

4. The system (10, 110, 210) of one of the preceding claims, wherein the first and/or second transfer functions (40, 42) have a free spectral range (FSR) between 5 GHz and 200 GHz, preferably between 10 GHz and 50 GHz.

5. The system (10, 110, 210) of one of the preceding claims, wherein the first and second transfer functions (40, 42) each have a free spectral range (FSR) and differ in that they are shifted with respect to each other by less than FSR/2, preferably by approximately FSR/3.

6. The system (10, 110, 210) of one of the preceding claims, wherein the first and/or second transfer functions (40, 42) have a finesse between 2 and 4, preferably of approximately 3.

7. The system (10, 110, 210) of one of the preceding claims, wherein the coupler (18, 118, 218) is a fiber optic polarization maintaining coupler (218) for providing at a coupler output mixed first polarization components on a first polarization maintaining fiber axis and mixed second orthogonal polarization components on a second orthogonal polarization maintaining fiber axis,
wherein the system further comprises

   - a polarization beam splitter (36) for separating the mixed first polarization components from the mixed second orthogonal polarization components,
   - a second photodiode (222) for generating a second detection signal (230) in response to receiving the mixed second orthogonal polarization components,

wherein the first photodiode (22, 122) is arranged for generating the first detection signal (30, 130) in response to receiving the mixed first polarization components.

8. The system (10, 110, 210) of one of the preceding claims, comprising photodetectors (128, 228, 126, 226) downstream and upstream of each etalon (124, 224) for determining the transmittance ($T_1$, $T_2$) and/or the reflectance for the different parameter settings.

9. The system (10, 110, 210) of one of the preceding claims, wherein the coupler (18, 218) has

   - a first input connected to the local oscillator (12),
   - a second input for receiving the optical signal (20),
   - a first output connected to the first photodiode (22) or to the first and second photodiodes (122, 222),
   - a second output connected to the first and second etalons (124, 224).

10. The system (10, 100, 210) of claim 9, wherein

   - the first output of the coupler (218) is connected via the polarization beam splitter (36) to the first and second photodiodes (122, 222) and
   - a second output of the coupler (218) is connected via a beam splitter (38) to the first and second etalons (124, 224).

11. The system (10, 110, 210) of one of the preceding claims, wherein the first and/or second photodiode (22, 122, 222) has an electro-optical bandwidth that is larger than 100 MHz.

12. The system (10, 110, 210) of one of the preceding claims, wherein the first and/or second photodiode (22, 122, 222) has a lower cut-off frequency that is larger than 10 MHz.

13. The system (10, 110, 210) of one of the preceding claims, configured for sequentially generating the local oscillator signal (16) with a different frequency without feedback control of the local oscillator.

14. A method for measuring a spectrum of an optical signal (20) with a system (10, 110, 210) of one of the preceding claims, comprising the following steps:

   - sequentially applying a different parameter setting to the local oscillator (12), such that the local oscillator signal (16) is sequentially generated with a different frequency ($f_{LO}$),
   - determining for each of said parameter settings the corresponding frequency ($f_{LO}$) of the local oscillator signal (16) based on

      • the respective parameter setting,
      • the correlation between the frequency of the local oscillator signal and the parameter setting,
      • the transmittance ($T_1$) of the local oscillator signal portion through the first etalon (24, 124) and/or the reflectance of the local oscillator signal portion by the first etalon (24, 124) at the respective parameter setting,
      • the first transfer function (40),
      • the transmittance ($T_2$) of the local oscillator signal portion through the second etalon (1224) and/or the reflectance of the local oscillator signal portion by the second etalon (224) at the respective parameter setting, and
      • the second transfer function (42), and

   - determining for each of said parameter settings a corresponding spectral intensity of the optical signal (20) based on the first detection signal (30, 130).

15. The method of claim 14, wherein the generated sequence of different frequencies is not a monotonously increasing sequence or monotonously decreasing sequence and/or consecutive frequencies are not equally spaced, and/or further comprising the following steps:

   - defining a set of different frequencies for the local oscillator signal (16),
   - determining the corresponding set of different parameter settings for the local oscillator (12) based on the correlation between the frequency of the local oscillator signal (16) and the parameter setting,
   - sequentially applying the determined different parameter settings such that the average differences between succeeding parameter settings are less than the average differences that would occur if the parameter settings were chosen according to a monotoneous increase or decrease among the frequencies of said set, and/or

further comprising the following step:

   - determining whether the first and second detection signals (130, 230) are correlated and to what extent.

Fig. 1

Fig. 2

Fig. 3

Fig. 4

Fig. 5

Fig. 6

Fig. 7

Fig. 8

Europäisches
Patentamt

European
Patent Office

Office européen
des brevets

# EUROPEAN SEARCH REPORT

Application Number

EP 17 17 4577

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | YOSHIDA S ET AL: "High resolution optical spectrum analysis by coherent detection with multi-electrode DBR-LD's as local oscillators", INSTRUMENTATION AND MEASUREMENT TECHNOLOGY CONFERENCE, 1994. IMTC/94. CONFERENCE PROCEEDINGS. 10TH ANNIVERSARY. ADVANCED TECHNOLOGIES IN I & M., 1994 IEEE HAMAMATSU, JAPAN 10-12 MAY, NEW YORK, NY, USA,IEEE, 10 May 1994 (1994-05-10), pages 230-233, XP010122102, DOI: 10.1109/IMTC.1994.352070 ISBN: 978-0-7803-1880-9 * page 232; figures 3, 6, 8-10 * | 1-15 | INV. H04B10/077 H04B10/079 |
| A | US 2004/151216 A1 (TSAI JOHN C [US] ET AL) 5 August 2004 (2004-08-05) * figure 8 * | 1-15 | |
| | | | TECHNICAL FIELDS SEARCHED (IPC) |
| | | | H04B |

The present search report has been drawn up for all claims

| Place of search | Date of completion of the search | Examiner |
|---|---|---|
| Munich | 17 November 2017 | Ganzmann, Anna |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

.................................................................................................................
& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 17 17 4577

This annex lists the patent family members relating to the patent documents cited in the above-mentioned European search report.
The members are as contained in the European Patent Office EDP file on
The European Patent Office is in no way liable for these particulars which are merely given for the purpose of information.

17-11-2017

| Patent document cited in search report | Publication date | Patent family member(s) | Publication date |
|---|---|---|---|
| US 2004151216 A1 | 05-08-2004 | NONE | |

For more details about this annex : see Official Journal of the European Patent Office, No. 12/82